# EUROPÄISCHE PATENTSCHRIFT

(11) **EP 1 375 552 B1**
(45) Veröffentlichungstag und Bekanntmachung des Hinweises auf die Patenterteilung: **03.11.2010**
(21) Anmeldenummer: 03012669.2
(22) Anmeldetag: 04.06.2003
(51) Int. Cl.: C08G 18/80, C08G 18/70, C09D 175/04

(54) **Wässrige und/oder wasserverdünnbare, mit sekundären Benzylaminen blockierte Polyisocyanate**
Aqueous and/or water-reducible polyisocyanates blocked with secondary benzyl amines
Polyisocyanates aqueux et/ou diluables à l'eau, bloqués aux amines secondaires à groupes benzyliques

(30) Priorität: 17.06.2002 DE 10226927
(43) Veröffentlichungstag der Anmeldung: 02.01.2004
(73) Patentinhaber: Bayer MaterialScience AG, 51368 Leverkusen (DE)
(72) Erfinder: Gürtler, Christoph, Dr., 50676 Köln (DE); Mazanek, Jan, Dr., 51061 Köln (DE); Petzoldt, Joachim, Dr., 40789 Monheim (DE); Müller, Heino, 51375 Leverkusen (DE)

(56) Entgegenhaltungen:
- EP-A- 0 096 210
- WO-A-97/12924
- DE-A- 3 922 767
- DE-A- 10 001 443

## Beschreibung

Die Erfindung betrifft wässrige und/oder wasserverdünnbare, mit sekundären Benzylaminen blockierte Polyisocyanate, deren Herstellung- und Verwendung in selbstvemetzenden Einkomponenten-Einbrennlacken.

Der Einsatz von Blockierungsmitteln zum temporären Schutz von Isocyanatgruppen ist seit langem bekannt. Blockierten Polyisocyanate werden zur Herstellung von bei Raumtemperatur lagerstabilen, in der Hitze härtbaren 1K-PUR-Einbrennsystemen eingesetzt. Die blockierten Polyisocyanate werden dabei z.B. mit Hydroxylgruppen enthaltenden Polyestern, Polyacrylaten, anderen Polymeren sowie weiteren Bestandteilen von Lacken und Farben wie Pigmenten, Colösem oder Additiven vermischt. Eine andere Möglichkeit, bei Raumtemperatur lagerstabile Einbrennlacke zu erhalten, ist die teilweise Blockierung der Isocyanatgruppen von Polymeren, die sowohl blockierte Isocyanate als auch Hydroxylgruppen enthalten.

Die wichtigsten Verbindungen, die zur Blockierung von Polyisocyanaten eingesetzt werden sind ε-Caprolactam, Methyl-ethyl-ketoxim, Malonsäureester, sekundäre Amine sowie Triazol- und Pyrazolderivate, so wie sie z.B. in den EP-A 576 952, EP-A 566 953, EP-A 159117, US-A 4482 721, WO 97/12924 oder EP-A 744 423 beschrieben sind.

Sekundäre Amine werden als Blockierungsmittel in der Patentschrift EP-A 96 210 beschrieben. Dort werden zwar auch Aralkyl-substituierte Amine als Blockierungsmittel beansprucht, ihre Anwendung wird aber in den Beispielen nicht offenbart. Der Einsatz solcher Amine in wässrigen Systemen ist aus EP-A 96 210 nicht bekannt.

Die technisch am häufigsten eingesetzten Blockierungsmittel für Isocyanate sind ε-Capro-lactam und Butanonoxim. Während bei ε-Caprolactam in der Regel Einbrenntemperaturen um 160°C angewandt werden, können blockierte 1K-Einbrennlacke, bei denen Butanonoxim als Blockierungsmittel eingesetzt wurde, schon bei 10-20°C niedrigeren Temperaturen eingebrannt werden. Allerdings wird bei diesen Einbrenntemperaturen in manchen Lacksystemen das gewünschte Eigenschaftsniveau nicht mehr erreicht. Aber auch diese Temperaturen werden einstweilen als zu hoch empfunden, so dass der Bedarf nach Einbrennsystemen besteht, die schon bei niedrigeren Temperaturen vollständig vernetzen.

Aufgabe der vorliegenden Erfindung ist somit, blockierte Polyisocyanate zu finden, die eine niedrigere Vemetzungs- bzw. Einbrenntemperatur ausweisen als butanonoximblockierte Polyisocyanate.

Diese Aufgabe wurde mit dem erfindungsgemäßen blockierten Polyisocyanaten und diese enthaltenden selbstvemetzenden Einkomponenten-Einbrennsystemen gelöst.

Gegenstand der vorliegenden Erfindung sind wässrige und/oder wasserverdünnbare blockierte Polyisocyanate der Formel (I) 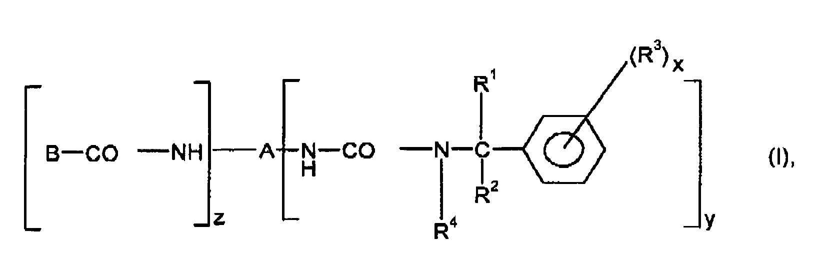 worin
- A: den Rest eines Polyisocyanats bedeutet,
- B: den Rest eines kationischen, anionischen und/oder nichtionischen Hydrophi- lierungsmittels bedeutet,
- R¹, R², R³: gleich oder verschieden sein können und Wasserstoff, C₁-C₄-Alkyl, C₆-C₁₀-Cycloalkyl bedeuten, wobei Wasserstoff bevorzugt ist,
- R⁴: C₁-C₄-Alkyl, C₆-C₁₀-Cycloalkyl oder C₁-C₁₄-Aralkyl, bevorzugt Methyl, Ethyl, Isopropyl und tert.-Butyl, besonders bevorzugt tert.-Butyl, bedeuten
- x: für die Zahl 1, 2, 3, 4 oder 5 steht und
- y: eine Zahl von 1 bis 8, bevorzugt 2 bis 6, besonders bevorzugt 2,5 bis 4,0 und
- z: eine Zahl von 0,1 bis 4, bevorzugt 0,2 bis 2 bedeutet;

wobei das Äquivalent-Verhältnis von y zu z 20:1 bis 1:1, bevorzugt 10:3 bis 3:1, besonders bevorzugt 8:1 bis 4:1 beträgt, bedeutet.

Gegenstand der Erfindung ist auch ein Verfahren zur Herstellung der blockierten Polyisocyanate der allgemeinen Formel (I) **dadurch gekennzeichnet, dass** Polyisocyanate mit sekundären Aminen der Formel (II) 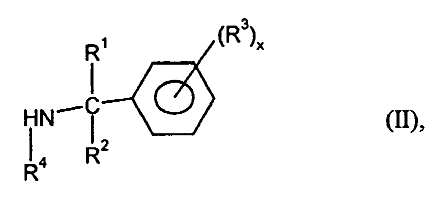 worin
R¹, R², R³ und R⁴ und x die bei Formel (I) genannte Bedeutung haben,
umgesetzt werden.

Besonders bevorzugt sind unsymmetrische substituierte sekundäre Amine, d.h. sekundäre Amine mit zwei unterschiedlichen Substituenten.

Ein weiterer Gegenstand der Erfindung ist die Verwendung der erfindungsgemäßen blockierten Polyisocyanate zur Herstellung von Lacken, Farben und anderen Einbrennsystemen wie Klebstoffen oder Elastomeren.

Als Beispiele für erfindungsgemäße sekundäre Amine seien genannt: N-Methyl-, N-Ethyl-, N-(Iso)propyl-, N-n-Butyl-, N-iso-Butyl-, N-tert.-Butyl-benzyl oder 1,1-Dimethylbenzylamin, N-Alkyl-N- 1,1 -Dimethylmethylphenylamin, Addukte von Benzylamin an Verbindungen mit aktivierten Doppelbindungen wie Malonsäureester, N,N-Dimethylaminopropylbenzylamin und andere tertiäre Aminogruppen enthaltende gegebenenfalls substituierte Benzylamine und/oder Dibenzylamin. Selbstverständlich können auch Gemische dieser Amine untereinander und/oder mit anderen Blockierungsmittel eingesetzt werden.

Als Polyisocyanate im Sinne der Erfindung eignen sich alle an sich bekannten hydrophilierten, aliphatischen, cycloaliphatischen und aromatischen Polyisocyanate mit einem Isocyanatgehalt von 0,5 bis 50, bevorzugt 3 bis 30, besonders bevorzugt 5 bis 25 Gew.-% wie Tetramethylen-diisocyanat, Cyclohexan-1,3- und 1,4-diisocyanat, Hexamethylendiisocyanat (HDI), 1-Isocyanato-3,3,5-trimethyl-5-isocyanato-methylcyclohexan (Isophorondiisocyanat, IPDI), Methylen-bis-(4-isocyanatocyclohexan), Tetramethylxylylendiisocyanat (TMXDI), Triisocyanatononan.

Prinzipiell geeignet sind auch aromatische Polyisocyanate wie Toluylendiisocyanat (TDI), Diphenylmethan-2,4'-und/oder 4,4'-diisocyanat (MDI),Triphenylmethan-4,4' diisocyanat, Naphthylen-1,5-diisocyanat.

Bevorzugt geeignet sind Polyisocyanate, die Heteroatome in dem die Isocyanatgrupppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate.

Besonders bevorzugt für die Erfindung geeignet sind die bekannten Polyisocyanate, die hauptsächlich bei der Herstellung von Lacken eingesetzt werden, z.B. Biuret-, Isocyanurat- oder Uretdiongruppen aufweisende Modifizierungsprodukte der obengenannten einfachen Polyisocyanate, insbesondere des Hexamethylendiisocyanats oder des Isophorondiisocyanats.

Weiterhin geeignet sind niedermolekulare, Urethan-Gruppen enthaltende Polyisocyanate, wie sie durch Umsetzung von im Überschuss eingesetztem IPDI oder TDI mit einfachen mehrwertigen Alkoholen des Molekulargewichtsbereiches 62-300, insbesondere mit Trimethylolpropan oder Glycerin, erhalten werden können.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05 : 1 bis 10 : 1, vorzugsweise 1,1 : 1 bis 3 : 1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden im übrigen vorzugsweise so gewählt, dass die NCO-Prepolymeren vorzugsweise eine mittlere NCO-Funktionalität von 2 bis 3 und ein Zahlenmittel der Molmasse von 500-10000, vorzugsweise 800-4000 aufweisen.

Weiterhin sind als Polyisocyanate im Sinne der Erfindung solche freie Isocyanatgruppen enthaltenden Polymere auf Polyurethan-, Polyester- und/oder Polyacrylat-Basis sowie gegebenenfalls deren Gemische geeignet, bei denen nur ein Teil der freien Isocyanatgruppen mit den erfindungsgemäßen Blockierungsmitteln umgesetzt wird, während der restliche Teil mit einem Überschuss an Hydroxylgruppen enthaltenden Polyestern, Polyurethanen und/oder Polyacrylaten sowie gegebenenfalls deren Gemische umgesetzt wird, so dass ein freie Hydroxygruppen enthaltendes Polymer entsteht, das beim Erhitzen auf geeignete Einbrenntemperaturen ohne Zugabe weiterer mit Isocyanatgruppen reaktionsfähigen Gruppen vernetzt (selbstvernetzende Einkomponenten-Einbrennsysteme).

Selbstverständlich können alle genannten Polyisocyanate auch als Gemische untereinander oder auch mit anderen Vernetzern wie mit Melaminharzen zur Herstellung von Lacken, Farben und anderen Formulierungen eingesetzt werden.

Die Herstellung der erfindungsgemäßen blockierten Polyisocyanate kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren. Selbstverständlich ist auch eine Herstellung in gegebenenfalls wassermischbaren Lösungsmitteln möglich, die gegebenenfalls nach der Herstellung wieder entfernt werden. Es ist aber auch möglich, die erfindungsgemäßen Polyisocyanate in mit Wasser nicht mischbaren Lösungsmitteln herzustellen, und diese Gemische anschließend in Wasser zu dispergieren bzw. sie mit wassermischbaren Lösungsmitteln wie Aceton oder N-Methylpyrrolidon zu wassermischbaren Lösungen zu verdünnen. Bei der Herstellung der erfindungsgemäßen Polyisocyanate können auch Katalysatoren, Colöser und andere Hilfsmittel und Additive verwendet werden.

Ein wesentlicher Bestandteil der Herstellung der erfindungsgemäßen blockierten Polyisocyanate ist deren Hydrophilierung, die dazu führt, dass die so hergestellten Polyisocyanate nach Zugabe von Wasser in Lösung bleiben oder aber feinteilige, sedimentationsstabile Dispersionen bilden.

Als Hydrophilierungsmittel können dabei alle für diesen Zweck geeigneten kationischen, anionischen und/oder nichtionischen Verbindungen eingesetzt werden wie Mono- und/oder Dihydroxycarbonsäuren oder monofunktionelle Alkylethoxilate. Selbstverständlich können auch Gemische verschiedener Hydrophilierungsmittel eingesetzt werden.

Der Einbau der Hydrophilierungsmittel in die erfindungsgemäßen Poly-isocyanate kann nach an sich bekanntem Verfahren erfolgen. So kann z.B. zuerst ein Teil der Isocyanatgruppen mit den erfindungsgemäßen Blockierungsmitteln und anschließend der Rest mit dem Hydrophilierungsmittel umgesetzt werden. Es kann aber auch umgekehrt verfahren werden oder aber so, dass die Blockierung der Isocyanatgruppen in zwei Schritten, nämlich vor und nach der Hydrophilierung erfolgt.

Selbstverständlich können die Hydrophilierungsmittel auch zu einem anderen Zeitpunkt der Herstellung der erfindungsgemäßen Polyisocyanate zugegeben werden wie z.B. bei der Herstellung der Prepolymere. Als Hydrophilierungsmittel können außerdem auch hydrophilierte Polyether, Polyester und/oder Polyacrylate eingesetzt werden, so wie sie z.B. bei der Herstellung von selbstvernetzenden Einkomponenten-Einbrennlacken verwendet werden.

Werden zur Hydrophilierung Mono- oder Dihydroxycarbonsäuren eingesetzt, so erfolgt anschließend eine volle oder teilweise Neutralisation der Carboxylgruppen. Die Neutralisation kann mit beliebigen Aminen erfolgen wie Triethyl-, Dimethylcyclohexyl-, Methyldiisopropyl- oder Dimethylethanolamin. Auch Ammoniak ist geeignet.

Die erfindungsgemäßen blockierten Polyisocyanate werden als hydrophilierte wässrige und/oder wasserverdünnbare blockierten Polyisocyanate als Vernetzer vorzugsweise in einer Zusammensetzung:
a) 100 Äquivalent-% Polyisocyanat
b) 40-90, bevorzugt 60-85 Äquivalent-% sekundäres Benzylamin
c) 10-40, bevorzugt 10-30, besonders bevorzugt 10 - 25 Äquivalent-% eines Hydrophilierungsmittels und gegebenenfalls
d) 0-40, bevorzugt 5-25 Äquivalent-% einer bevorzugt difunktionellen Hydroxyl- und/oder Aminogruppen enthaltenden Verbindung eines mittleren Molgewichts von 62 bis 3000, bevorzugt 62 bis 1500,
   wobei die Mengenverhältnisse der Reaktionspartner so gewählt werden, dass das Äquivalentverhältnis von NCO-Gruppen der Komponente a) zu gegenüber Isocyanaten reaktionsfähigen Gruppen der Komponenten b), c) und d) bei 1:0,8 bis 1:1,2 liegt, sowie gegebenenfalls Zuschlagstoffe und Hilfsstoffe,
verwendet.

Als difunktionelle Kettenverlängerungskomponente c) kommen beispielsweise Diamine, Diole und auch Hydroxyamine im Molekulargewichtsbereich von 32 bis 300 in Betracht. Beispiele sind Hydrazin, Ethylendiamin, Isophorondiamin, das Bisketimin aus Isophorondiamin und Methylisobutylketon, 1,4-Dihydroxy-butan, 1,6-Hexandiol, Ethanolamin, N-Methylethanolamin, Hydroxyethylethylendiamin, das Addukt von 2 Mol Propylencarbonat und 1mol Hydrazin der Formel (III)
in Frage.

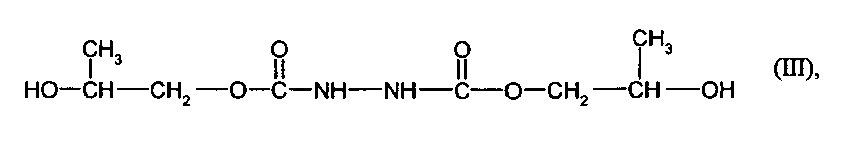

Die wässrigen und/oder wasserverdünnbaren blockierten Polyisocyanate liegen entweder als Lösungen in vorzugsweise wassermischbaren Lösungsmitteln wie N-Methylpyrrolidon mit einer Konzentration von 40-95, vorzugsweise 60-85 Gew.-% vor oder aber als feinteilige Dispersionen mit einem Feststoffgehalt von 25-70, vorzugsweise 35-50 Gew.-%.

Die erfindungsgemäßen Polyisocyanate sind, wie oben beschrieben, entweder selbstvernetzende Polymere oder aber Vernetzer für Polyolkomponenten. Als Polyolkomponenten, die auch als Gemische eingesetzt werden können, kommen in Betracht:
Polyhydroxypolyester, Polyhydroxypolyether oder Hydroxylgruppen aufweisende Polymerisate, z.B. die an sich bekannten Polyhydroxypolyacrylate. Die Verbindungen weisen im allgemeinen eine Hydroxylzahl von 20 bis 200, vorzugsweise von 50 bis 130, bezogen auf 100 %ige Produkte, auf.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-,3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich Gemische der beispielhaft genannten mehrwertigen Alkohole oder Gemische der beispielhaft genannten Säuren bzw. Säureanhydride eingesetzt werden.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls erforderliche hydrophile Modifizierung dieser Polyhydroxylverbindungen erfolgt nach an sich bekannten Methoden, wie sie beispielsweise in EP-A-0 157 291 oder EP-A-0 427 028 offenbart sind.

Selbstverständlich können auch Gemische oder aber Reaktionsprodukte auf der Basis von Polyestern, Polyethern und Polyacrylaten, gegebenenfalls auch modifiziert durch Polyurethane der bekannten Art, eingesetzt werden.

Die erfindungsgemäßen blockierten Polyisocyanate werden zur Herstellung von Einbrennlacken, zur Beschichtung von Substraten, vorzugsweise aus Metallen, mineralischen Stoffen, Holz, Kunststoffen, z.B. für die Industrielackierung und bei der Automobilerstlackierung verwendet. Hierzu können die erfindungsgemäßen Überzugsmittel durch Rakeln, Tauchen, Spritzauftrag wie Druckluft- oder Airless-Spritzen, sowie durch elektro-statischen Auftrag, beispielsweise Hochrotationsglockenauftrag, aufgetragen werden. Die Trockenfilm-Schichtdicke kann beispielsweise bei 10-120 µm liegen. Das Aushärten der getrockneten Filme erfolgt durch Einbrennen im Temperaturbereich von 90-160°C, bevorzugt 110-140°C, besonders bevorzugt 120-130°C.

Die Herstellung der Lacke, Farben und anderen Formulierungen aus den erfindungsgemäßen Polyisocyanaten erfolgt nach an sich bekannten Methoden.

Außer den Polyisocyanaten und Polyolen können den Formulierungen übliche Additive und andere Hilfsstoffe (z.B. Pigmente, Füllstoffe, Verlaufsmittel, Entschäumer, Katalysatoren) in durch den Fachmann leicht zu ermittelnden Mengen zugesetzt werden.

### Beispiele

### Partikelgrößen wurden durch Larver-Korrelationsspektroskopie (LSK) bestimmt

### Beispiel 1: (Herstellung eines wasserverdünnbaren Polyisocyanat-Vernetzers)

58,80 g (0,297 Val) eines handelsüblichen isocyanurathaltigen Lackpolyisocyanates auf Basis von 1 ,6-Diisocyanatohexan (HDI) mit einem NCO-Gehalt von 21,4 Gew.-%, einer Viskosität bei 23°C von ca. 3000 mPas und einer Funktionalität von ca. 3,5, 7,08 g (0,06 Mol) Hydroxypivalinsäure und 56,57 g N-Methylpyrrolidon wurden unter Rühren vermischt und innerhalb von 30 Min. auf 70°C erwärmt. Bei dieser Temperatur wurde 2 Stunden gerührt und die Temperatur anschließend auf 80°C erhöht. Nach weiteren 2 Stunden wurde ein NCO-Gehalt von 7,60 % erreicht, das Reaktionsgemisch auf 55°C abgekühlt und dann innerhalb von 15 Min. 36,24 g (0,222 Mol) Benzyl-tert.-butylamin zugegeben, wobei die Temperatur auf 60°C anstieg.

Es wurde 10 Min. bei 60°C nachgerührt und die Vollständigkeit der Reaktion durch IR-Spektrum nachgewiesen. Anschließend wurden bei 60°C 5,35 g (0,06 Mol) Dimethylethanolamin zugegeben und 10 Min. nachgerührt. Es entstand eine klare Lösung des blockierten Polyisocyanats mit einem Feststoffgehalt von 66,6 % und mit einem Gehalt an blockierten NCO-Gruppen von 5,69 %.

### Beispiel 2: (Herstellung einer erfindungsgemäßen wässrigen Dispersion)

Zu 58,80 g (0,297 Val) eines handelsüblichen isocyanurathaltigen Lackpolyisocyanates auf Basis von 1,6-Diisocyanatohexan (HDI) mit einem NCO-Gehalt von 21,4 % Gew.-%, einer Viskosität bei 23°C von ca. 3000 mPas und einer Funktionalität von ca. 3,5, wurden unter Rühren bei Raumtemperatur innerhalb von 20 Min. 31,09 g (0,189 Mol) Benzyl-tert.-butylamin zugegeben. Dabei stieg die Temperatur auf 43°C, der NCO-Gehalt des Reaktionsgemisches erreichte 5,04 % (theoret. 5,07 %). Das Reaktionsgemisch wurde auf 70°C unter Rühren aufgeheizt und dann wurden nacheinander innerhalb von insgesamt 30 Min. 1,61 g (0,0135 Mol) 1,6-Hexandiol und 6,42 g (0,054 Mol) Hydroxypivalinsäure, letztere gelöst in 10,36 g N-Methylpyrrolidon, zugegeben. Es wurde weiter 2 Stunden bei 70°C gerührt, der NCO-Gehalt erreichte 0,5%. Dann wurden bei 70°C 5,34 g (0,0594 Mol) Dimethylethanolamin zugegeben und 15 Min. nachgerührt. Anschließend wurden 143,84 g 70°C warmes entionisiertes Wasser zugegeben und 1 h bei 70°C dispergiert. Es entstand eine stabile weiße Dispersion mit nachfolgenden Eigenschaften:

| | |
|---|---|
| Festkörpergehalt: | 40 % |
| pH-Wert: | 9,22 |
| Viskosität (23°C): | 200 mPas |
| Mittlere Partikelgröße (LKS): | 201 nm |

### Beispiel 3: (Herstellung einer erfindungsgemäßen Dispersion)

343,20 g (1,76 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000 mPas und einer Funktionalität von ca. 3,5, wurden auf 70°C unter Rühren aufgeheizt und 9,45 g (0,08 g Mol) 1,6 Hexandiol innerhalb von 10 Minuten zugegeben. Nach Zugabe einer Lösung aus 37,76 g (0,32 Val) Hydroxypivalinsäure in 60,93 g N-Methylpyrrolidon (innerhalb von 10 Min.) wurde 4 Stunden bei 70°C gerührt. Der NCO-Gehalt des Reaktionsgemisches betrug dann 11,02 %. Anschließend wurden bei 70°C innerhalb von 60 Min. 193,30 g (1,184 Mol) N-Benzyl-tert.-butylamin zugegeben und 20 Min. nachgerührt. IR-Spektroskopisch konnte dann kein NCO mehr gefunden werden. Innerhalb von 10 Min. wurden bei 70°C 31,38 g (0,352 Mol) Dimethylethanolamin zugegeben, 10 Min. nachgerührt und anschließend unter Rühren 861,7 g 70°C warmes entionisiertes Wasser zugegeben und 1 Stunde bei 70°C nachgerührt. Nach Abkühlen unter Rühren auf Raumtemperatur wurde eine Dispersion mit folgenden Eigenschaften erhalten:

| | |
|---|---|
| Festkörpergehalt: | 40 % |
| pH-Wert: | 9,41 |
| %-blockiertes NCO: | 3,23 % |
| Viskosität: | 300 mPas |
| Partikelgröße (LKS): | 19 nm |

### Beispiel 3a:

Es wurde wie im Beispiel 3 beschrieben gearbeitet, jedoch wurde Hydroxypivalinsäure innerhalb von 3 Stunden zugetropft und als Polyisocyanat eine 70 %ige Lösung des Trimerisats von Isophorondiisocyanat in Methoxypropylacetat/Xylol (Desmodur^{®} Z 4400 M/X, Bayer AG) verwendet. Die erhaltene Dispersion hatte nachfolgende Eigenschaften:

| | |
|---|---|
| Festkörpergehalt | 35 % |
| pH-Wert: | 9,28 |
| Viskosität (23°C): | 60 mPas |
| Partikelgröße (LKS): | 85 nm |

### Beispiel 3 b:

Es wurde wie im Beispiel 3 gearbeitet, jedoch wurde als Polyisocyanat ein Gemisch aus IPDI-Trimerisat und 4-Isocyanatomethyl-1,8-octandiisocyanat (Desmodur^{®} Z 4460 TIN, Bayer AG) eingesetzt. Die erhaltene Dispersion besaß folgende Eigenschaften:

| | |
|---|---|
| Festkörpergehalt: | 40 % |
| pH-Wert: | 9,5 |
| Viskosität (23°C): | 45 mPas |
| Partikelgröße (LKS): | 255 nm |

### Beispiel 4:

78,00 g (0,4 Val) eines handelsüblichen isocyanurathaltigen Lackpolyisocyanates auf Basis von 1,6-Diisocyanatohexan (HDI) mit einem NCO-Gehalt von 21,4 % Gew.-%, einer Viskosität bei 23°C von 3000 mPas und einer Funktionalität von ca. 3,5, wurden bei 70°C unter Rühren vorgelegt und eine Lösung aus 4,72 g (0,04 Mol) Hydroxypivalinsäure und 1,34 g (0,01 Mol) Dimethylolpropionsäure in 11,17 g N-Methylpyrrolidon wurde innerhalb von 5 Min. zugegeben. Nach Zugabe von 4,00 g (0,008 Mol) Pluriol 500 (Methyloligoethylenglykol, MG 500) und 1,18 g (0,02 Mol) 1,6 Hexandiol wurde 90 Min. bei 70°C gerührt. Der NCO-Gehalt lag dann bei 13,01 % (theoret. 13,05 %). Bei 70°C wurden 50,94 g (0,312 Mol) N-Benzyl-tert.-butylamin innerhalb von 20 Min. zugegeben und 15 Min. bei 70°C nachgerührt. Es konnten dann keine NCO-Gruppen IR-Spektroskopisch nachgewiesen werden. Bei 70°C wurden 4,46 g (0,05 Mol) Dimethylethanolamin zugegeben, 10 Min. nachgerührt und dann 205,79 g 50°C warmes Wasser zugegeben. Es wurde 1 Stunde bei 50°C nachgerührt. Die entstandene bläuliche Dispersion hatte folgende Eigenschaften:

| | |
|---|---|
| Festkörpergehalt: | 40 % |
| pH-Wert: | 9,7 |
| Viskosität (23°C): | 2000 mPas |
| Partikelgröße (LKS): | 37 nm |

### Beispiel 5: (Herstellung einer Dispersion)

Es wurde wie im Beispiel 3 gearbeitet, jedoch wurde anstelle von N-Benzyl-tert.-butylamin ein Gemisch aus Diisopropylamin und N-Benzyl-tert.-butylamin im Mol.-Verhältnis 2 : 1 eingesetzt. Die erhaltene Dispersion besaß folgende Eigenschaften:

| | |
|---|---|
| Festkörpergehalt: | 40 % |
| pH-Wert: | 9,3 |
| Viskosität (23°C): | 330 mPas |
| Partikelgröße (LKS): | 24 nm |

### Beispiel 6: (Herstellung einer erfindungsgemäßen Dispersion)

Es wurde wie im Beispiel 4 gearbeitet, jedoch wurde anstelle von N-Benzyl-tert.-butylamin in Gemisch aus Diisopropylamin und N-Benzyl-tert.-butylamin im Mol.-Verhältnis 2 : 1 eingesetzt. Die erhaltene Dispersion besaß nachfolgende Eigenschaften:

| | |
|---|---|
| Festkörpergehalt: | 40 % |
| pH-Wert: | 9,75 |
| Viskosität (23°C): | 850 mPas |
| Partikelgröße (LKS): | 23 nm |

### Beispiel 7 (Vergleichsbeispiel I)

Es wurde gearbeitet wie in Beispiel 2 beschrieben, jedoch wurde anstelle von N-Benzyl-tert.-Butylamin Butanonoxim eingesetzt. Die erhaltene Dispersion besaß nachfolgende Eigenschaften:

| | |
|---|---|
| Festköpergehalt: | 38 % |
| pH-Wert: | 8,5 |
| Viskosität (23°C): | 4000 mPas |
| Partikelgröße (LKS): | 42 nm |

### Beispiele (Anwendungsbeispiele)

Die nachfolgenden Beispiele zeigen die Vorteile der erfindungsgemäßen blockierten Polyisocyanate gegenüber dem Stand der Technik.

Es wurden Klarlacke nachfolgender Zusammensetzung hergestellt. Aus den Klarlacken wurden Filme hergestellt, 10 Min. bei Raumtemperatur getrocknet und anschließend 30 Min. bei 130°C eingebrannt. Die erhaltenen Filme wurden anwendungstechnisch beurteilt. Die Ergebnisse sind in Tabelle 1 zusammengestellt.

**Tabelle 1 (NCO : OH = 1,0)**

| **Polyisocyanat aus Beispiel-Nr.** | **1** | **2** | **3** | **4** | **5** | **6** | **7** |
|---|---|---|---|---|---|---|---|
| **Produkt (g)** | | | | | | | |
| Bayhydrol^{®} PT 241 ¹⁾ | 20,1 | 20,1 | 20,1 | 20,1 | 20,1 | 20,1 | 20,1 |
| Bayhydrol^{®} VP LS 2290 | 54,9 | 54,9 | 54,9 | 54,9 | 54,9 | 54,9 | 54,9 |
| Adclitol^{®} XW 395 Lff | 1,2 | 1,3 | 1,2 | 1,2 | 1,2 | 1,1 | 1,1 |
| Surbynol^{®} 104, 50%ig in NMP | 1,2 | 1,3 | 1,2 | 1,2 | 1,2 | 1,1 | 1,1 |
| Dest. Wasser | 66,0 | 7,0 | 17,0 | 13,0 | 18,0 | 15,0 | 17,0 |
| Polyisocyanat | 56,4 | 103,8 | 100,3 | 54,9 | 90,9 | 80,2 | 82,3 |
| | | | | | | | |

| **Eigenschaft** | | | | | | | |
|---|---|---|---|---|---|---|---|
| Pendelhärte (s) | 198 | 200 | 198 | 199 | 194 | 175 | 103 |
| Anlösbarkeit (1 Min.) | 1134 | 2234 | 2234 | 2244 | 3244 | 3244 | 3344 |
| Impact-Test | >80/>80 | 60/60 | >80/>80 | >80/>80 | <20/<20 | <20/<20 | <20/<20 |
| Na Cl-Test 144h (Stahl) | 5mm | 6mm | 9 mm | 8mm | 14mm | 16mm | 22 mm |

| | | | | | | | |
|---|---|---|---|---|---|---|---|
| 1) Bayer AG, Leverkusen Lff: Lieferform | | | | | | | |

## Patentansprüche

1. Wässrige und/oder wasserverdünnbare blockierte Polyisocyanate der allgemeinen Formel 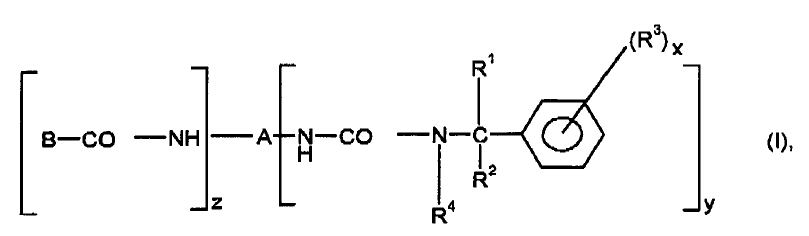 worin
A den Rest eines Polyisocyanats bedeutet,
B den Rest eines kationischen, anionischen und/oder nichtionischen Hydrophilierungsmittels bedeutet,
R¹, R², R³ gleich oder verschieden sein können und Wasserstoff, C₁-C₄-Alkyl oder C₆-C₁₀-Cycloalkyl bedeuten,
R⁴ C₁-C₄-Alkyl, C₆-C₁₀-Cycloalkyl oder C₁-C₁₄-Aralkyl bedeutet, und
x für die Zahl 1, 2, 3, 4 oder 5 steht und
y eine Zahl von 1 bis 8 und
z eine Zahl von 0,1 bis 4 bedeutet,
wobei das Äquivalent-Verhältnis von y zu z 20:1 bis 1:1 beträgt.

2. Verfahren zur Herstellung der blockierten Polyisocyanate gemäß Anspruch 1 **dadurch gekennzeichnet, dass** Polyisocyanate mit sekundären Aminen der allgemeinen Formel (II) 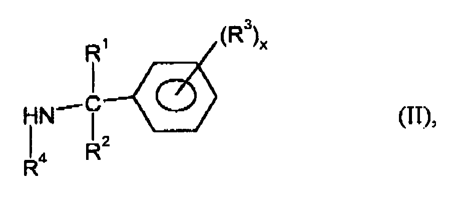 worin
R¹, R², R³ und R⁴ und x die in Anspruch 1 bei Formel (I) genannte Bedeutung haben, zur Reaktion gebracht werden.

3. Wässrige und/oder wasserverdünnbare blockierte Polyisocyanate gemäß Anspruch 1, **dadurch gekennzeichnet, dass** als sekundäres Amin N-Benzyl-tert.-butylamin verwendet wird.

4. Verwendung der blockierten Polyisocyanate gemäß Anspruch 1 zur Herstellung von Lacken, Farben und anderen Einbrennsystemen.

5. Verwendung gemäß Anspruch 4, wobei es sich bei den Einbrennsystemen um Klebstoffe oder Elastomere handelt.

6. Verwendung der Polyisocyanate gemäß Anspruch 1 zur Herstellung von selbstvernetzenden Einkomponenten-Einbrennsystemen auf Polyurethanbasis.

7. Verwendung der blockierten Polyisocyanate gemäß Anspruch 1 als hydrophilierte, wässrige und/oder wasserverdünnbare blockierte Polyisocyanate in einer Zusammensetzung
a) 100 Äquivalent-% Polyisocyanat
b) 40-90, Äquivalent-% sekundäres Benzylamin
c) 10-40, Äquivalent-% eines Hydrophilierungsmittels und
d) 0-40, Äquivalent-% einer difunktionellen Hydroxyl- und/oder Aminogruppen enthaltenden Verbindung, mittleren Molgewichts von 62 bis 3000,
wobei die Mengenverhältnisse der Reaktionspartner so gewählt werden, dass das Äquivalentverhältnis von NCO-Gruppen der Komponente a) zu gegenüber Isocyanaten reaktionsfähigen Gruppen der Komponenten b), c) und d) bei 1:0,8 bis 1:1,2 liegt, sowie gegebenenfalls Zuschlagstoffe und Hilfsstoffe.

8. Verwendung gemäß Anspruch 7, wobei der Anteil an sekundärem Benzylamin 60 bis 85 Äquivalent-% beträgt.

9. Verwendung gemäß Anspruch 7 oder 8, wobei der Anteil an Hydrophilierungsmittel (c) 10 bis 25 Äquivalent-% beträgt.

10. Verwendung gemäß Anspruch 7, 8 oder 9, wobei der Anteil an difunktionellen Hydroxyl- und/oder Aminogruppen enthaltenden Verwindungen (d) 5 bis 25 Äquivalent-% beträgt.

11. Verwendung der blockierten Polyisocyanate gemäß Ansprüchen 4 bis 6 in Einbrennlacken zur Beschichtung von Substanzen aus Holz, Metallen, mineralischen Stoffen und Kunststoffen.

## Claims

1. Aqueous and/or water-dilutable blocked polyisocyanates of the general formula 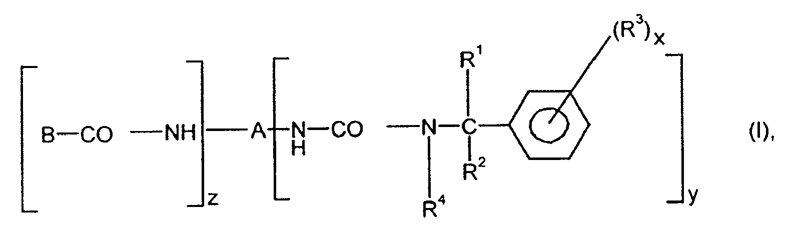 in which
A denotes the radical of a polyisocyanate,
B denotes the radical of a cationic, anionic and/or nonionic hydrophilicizing agent,
R¹, R² and R³ may be identical or different and denote hydrogen, C₁-C₄-alkyl or C₆-C₁₀- cycloalkyl,
R⁴ denotes C₁-C₄-alkyl, C₆-C₁₀-cycloalkyl or C₁- C₁₄-aralkyl, and
x stands for the number 1, 2, 3, 4 or 5 and
y denotes a number from 1 to 8, and
z denotes a number from 0.1 to 4,
the equivalents ratio of y to z being from 20:1 to 1:1.

2. Process for preparing the blocked polyisocyanates according to Claim 1, **characterized in that** polyisocyanates are reacted with secondary amines of the general formula (II) 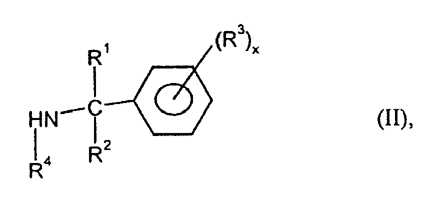 in which
R¹, R², R³ and R⁴ and x have the definition specified in Claim 1 for formula (I).

3. Aqueous and/or water-dilutable blocked polyisocyanates according to Claim 1, **characterized in that** N-benzyl-tert-butylamine is used as secondary amine.

4. Use of the blocked polyisocyanates according to Claim 1 for preparing paints, inks and other baking systems.

5. Use according to Claim 4, the baking systems being adhesives or elastomers.

6. Use of the polyisocynates according to Claim 1 for producing polyurethane-based self-crosslinking one-component baking systems.

7. Use of the blocked polyisocyanates according to Claim 1 as hydrophilicized, aqueous and/or water-dilutable blocked polyisocyanates in a composition
a) 100 equivalent% of polyisocyanate
b) 40-90 equivalent% of secondary benzylamine
c) 10-40 equivalent% of a hydrophilicizing agent and
d) 0-40 equivalent% of a difunctional hydroxyl- and/or amino-containing compound with an average molar weight of from 62 to 3000,
the proportions of the reactants being chosen such that the equivalents ratio of NCO groups of component a) to isocyanate-reactive groups of components b), c) and d) is from 1:0.8 to 1:1.2, and also, where appropriate, adjuvants and auxiliaries.

8. Use according to Claim 7, the proportion of secondary benzylamine (b) being from 60 to 85 equivalent%.

9. Use according to Claim 7 or 8, the proportion of hydrophilicizing agent (c) being from 10 to 25 equivalent%.

10. Use according to Claim 7, 8 or 9, the proportion of difunctional hydroxyl- and/or amino-containing compounds (d) being from 5 to 25 equivalent%.

11. Use of the blocked polyisocyanates according to Claims 4 to 6 in baking varnishes for the coating of substances comprising wood, metals, minerals and plastics.

## Revendications

1. Polyisocyanates bloqués, aqueux et/ou diluables à l'eau de formule générale 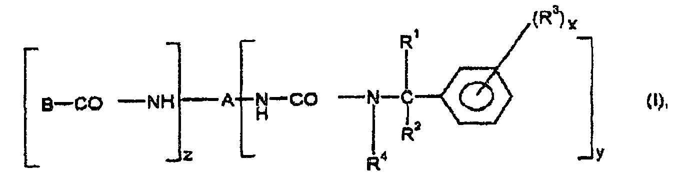 où
A signifie le radical d'un polyisocyanate,
B signifie le radical d'un agent d'hydrofugation cationique, anionique et/ou non ionique,
R¹, R², R³ peuvent être identiques ou différents et signifient hydrogène, C₁-C₄-alkyle ou C₆-C₁₀- cycloalkyle,
R⁴ signifie C₁-C₄-alkyle, C₆-C₁₀-cycloalkyle ou C₁-C₁₄- aralkyle, et
x représente le nombre 1, 2, 3, 4 ou 5 et
y signifie un nombre de 1 à 8 et
z signifie un nombre de 0,1 à 4,
où le rapport d'équivalents de y à z est de 20:1 à 1:1.

2. Procédé pour la préparation des polyisocyanates bloqués selon la revendication 1, **caractérisé en ce qu'**on fait réagir des polyisocyanates avec des amines secondaires de formule générale (II) 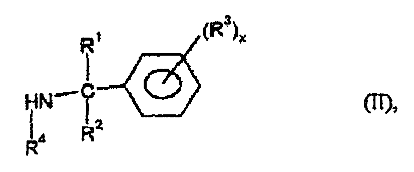 où
R¹, R², R³ et R⁴ et x présentent la signification mentionnée pour la formule (I) dans la revendication 1.

3. Polyisocyanates bloqués, aqueux et/ou diluables à l'eau selon la revendication 1, **caractérisés en ce qu'**on utilise, comme amine secondaire, de la N-benzyl-tert-butylamine.

4. Utilisation des polyisocyanates bloqués selon la revendication 1 pour la préparation de laques, de peintures et d'autres systèmes durcis au four.

5. Utilisation selon la revendication 4, où il s'agit, pour les systèmes durcis au four, d'adhésifs ou d'élastomères.

6. Utilisation des polyisocyanates selon la revendication 1 pour la production de systèmes durcis au four à un composant auto-réticulants à base de polyuréthane.

7. Utilisation des polyisocyanates bloqués selon la revendication 1 comme polyisocyanates aqueux et/ou diluables à l'eau, hydrofugés dans une composition contenant
a) 100% en équivalent de polyisocyanate
b) 40-90 % en équivalent de benzylamine secondaire
c) 10-40% en équivalent d'un agent d'hydrofugation et
d) 0-40% en équivalent d'un composé difonctionnel contenant des groupes hydroxyle et/ou amino, de poids moléculaire moyen de 62 à 3000,
où les rapports des quantités des partenaires de réaction sont choisis de manière telle que le rapport d'équivalents de groupes NCO du composé a) aux groupes aptes à réagir avec les isocyanates des composés b), c) et d) se situe à 1:0,8 jusqu'à 1:1,2, ainsi que le cas échéant des additifs et des adjuvants.

8. Utilisation selon la revendication 7, où la proportion de benzylamine secondaire (b) est de 60 à 85% en équivalent.

9. Utilisation selon la revendication 7 ou 8, où la proportion d'agent d'hydrofugation (c) est de 10 à 25% en équivalents.

10. Utilisation selon la revendication 7, 8 ou 9, où la proportion de composés (d) difonctionnels contenant des groupes hydroxyle et/ou amino est de 5 à 25% en équivalent.

11. Utilisation des polyisocyanates bloqués selon les revendications 4 à 6 dans des laques durcies au four pour le revêtement de substances en bois, en métaux, de substances minérales et de matériaux synthétiques.
